# EUROPEAN PATENT APPLICATION

(11) **EP 2 226 591 A1**
(43) Date of publication of application: **08.09.2010**
(21) Application number: 09014594.7
(22) Date of filing: 24.11.2009
(51) Int. Cl.: F24J 2/05, F24J 2/26, F24J 2/46, F24J 2/50

(54) **Flat vacuum photo-thermal solar panel**

(30) Priority: 03.03.2009 IT CO20090003
(71) Applicant: Saporito, Santolo, 21040 Lozza (VA) (IT)
(72) Inventor: Saporito, Santolo, 21040 Lozza (VA) (IT)
(74) Representative: Lecce, Giovanni

(57) **Abstract**

A photo-thermal solar panel consists of two half shells (1), (2) with undulated profile (3) which, connected watertight, and in a vacuum, form a plurality of chambers or parallel channels (6) at the centre whereof there are arranged as many tubes (10), with fins (11) which, at the ends, connect to inlet (9') and outlet (9") manifolds. A conductor fluid circulates within the tubes (10) and the manifolds (9', 9") which heats by solar radiation. The top half shell (1) may be made of glass or transparent plastic materials; the bottom one (2) of glass, transparent plastic materials, reflecting sheets, plastic or metal, treated with reflecting coatings.

## Description

The invention relates to a flat vacuum photo-thermal solar panel, especially suitable for both industrial and civil applications.

Different types of solar panels are currently known, generally intended for heating water directly or fluids acting in thermal exchangers indirectly, using the caloric energy derived from solar radiations.

It is also known that most of such panels, despite their effective use of the solar energy, exhibit some drawbacks: in particular, the technologies currently adopted are quite sophisticated, quite complex and substantially expensive.

Other drawbacks result from the fact that the use of tubing with materials effective as conductors, yet delicate as material, such as for example those of glass with a dual coaxial chamber, could easily break in contact with snow and ice, thus impairing the systems.

Further disadvantages result from the fact of requiring constant and expensive maintenance work.

The object of this invention is to eliminate the above drawbacks by a flat vacuum photo-thermal solar panel, characterised according to what claimed in claim 1.

Further features are defined in the dependent claims.

The advantages achieved by said flat vacuum photo-thermal solar panel consist in that, while exhibiting technical functionality, efficiency and yield features that are equal and even higher than the current panels, it may be made in a simple and inexpensive manner, with easy to find materials and at considerably lower cost.

Another advantage consists in that the panel according to the invention is easy to setup, only requires periodical, limited and simple maintenance work, and is tested to withstand and remain in regular operation for a very long time.

The invention is described in detail hereinafter, according to an embodiment thereof given only by way of a non-limiting example, with reference to the attached drawings, wherein:

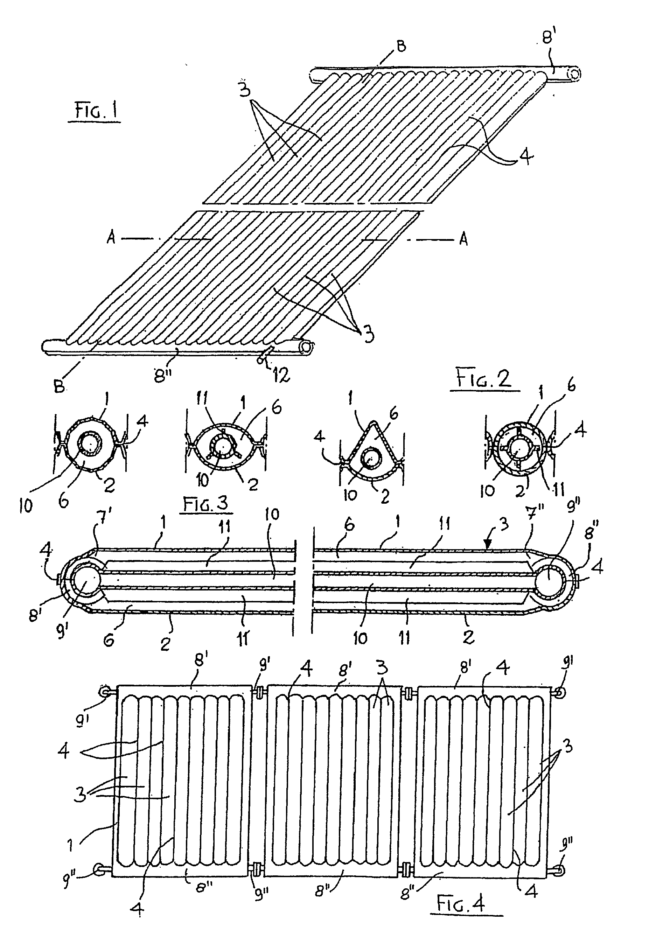

fig. 1 shows a schematic and perspective view of a generic solar panel according to the invention,
fig. 2 shows partial schematic cross sections A-A of examples of arrangement of said vacuum coupled half shells and of the relative inner tubing,
fig. 3 shows a schematic longitudinal section B-B of one of the subject panels,
fig. 4 shows an example of application with the combination of multiple panels associated to one another, and
fig. 5 shows a perspective exploded view of the same panel of figure 1, wherein the fundamental details thereof are shown, consisting in two watertight coupling half shells and forming a single vacuum enclosure wherein the active fluid circulation tubing is arranged.

With reference to the figures, a photo-thermal solar panel, according to the invention substantially consists of a top half shell (1) of transparent material and a bottom half shell (2) of refractive material.

The top transparent half shell (1) may be made of glass, transparent plastic or other material or combinations of materials suitable for forming a transparent body that allows the passage of radiating waves coming from the solar radiation; also the bottom half shell (2) may be made either with the same materials as the top one, or of a metal sheet polished mirror-like or treated with reflecting coatings, or also of plastic materials (ABS and the like) treated with reflecting coatings.

The half shells (1) and (2) are profiled with an equal plurality of longitudinal undulations (3), with preferably semi-circular, or even triangular, ovoid, semi-polygonal or mixed section, and are coupled and constrained together, one on top of the other, along the peripheral perimeter (4) and along the intermediate edges (5) of the undulations (3), so as to form a plurality of chambers or almost tubular channels (6).

The jointed front (7') and back (7") ends of said chambers (6) merge into cross seats (8') and (8") wherein the inlet (9') and outlet (9") manifolds of the circulation fluid for thermal exchange are arranged.

On the other hand, a tubular element (10) is arranged in each of said chambers or channels (6), the ends whereof connect watertight to said manifolds (9') and (9"); the tubular elements (10) are, preferably but not limitedly, provided with one or more longitudinal fins (11), with generally radial arrangement, the dual function whereof is to increase the heat absorbing surface and to stiffen the panel structure as a whole.

At least one valve (12) constitutes the connection for a vacuum pump and is used for generating the vacuum inside the panel and optionally, for restoring the vacuum itself during maintenance works, in the case of reduction of the same.

The complete panel, installed for example on a roof, is oriented in the direction of the greatest exposure of sun rays, which hitting the transparent surface of the top half shell (1), penetrate into the chambers or tubular channels (6) and heat the corresponding tubular elements (10) and, as a consequence, the fluid circulating therein.

The sun rays that do not directly hit said tubular elements (10) are refracted thanks to the bending or to the inclination of the inside surfaces of the bottom half shells (2), hitting the underlying portion of the same tubular elements, and the optional longitudinal fins (11) in return.

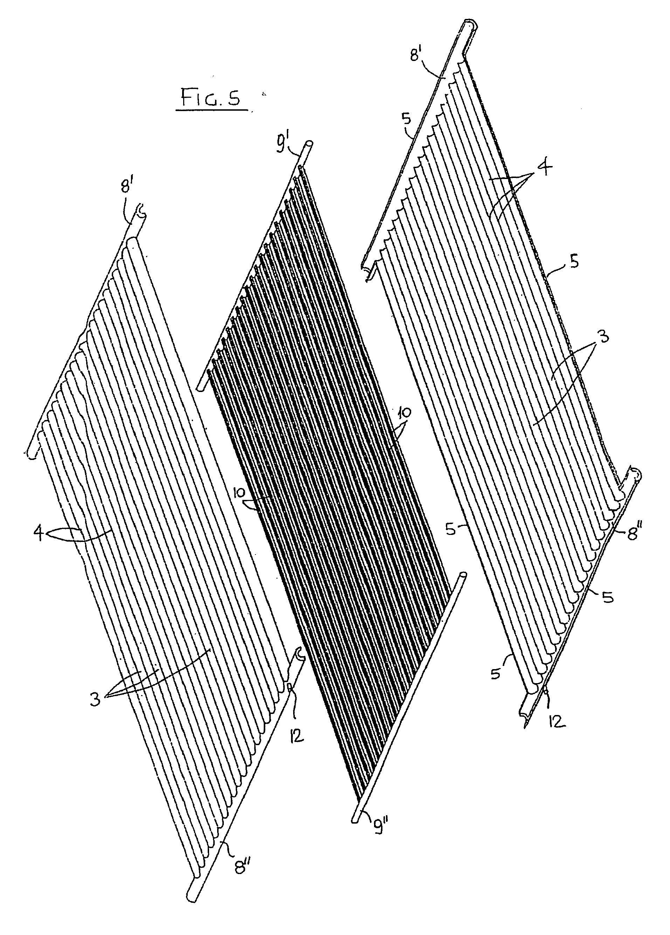

The ends of the inlet (9') and outlet (9") manifolds are provided with flanges for the connection to other complementary panels (figure 5).

While the invention has been described and illustrated with reference to a specific embodiment thereof, made by way of a non-limiting example, it is clear that several changes and/or variations to what expressed in the description and in the embodiments may be made by the man skilled in the art; the invention is therefore intended to also include any changes and/or modifications and/or forms and/or applications that fall within the spirit and scope of protection of the following claims.

## Claims

1. Flat photo-thermal solar panel **characterised in that** it consists of two half shells (1), (2) profiled with equal pluralities of longitudinal undulations (3) with semi-circular, triangular, ovoid, semi-polygonal or mixed section, which coupled and constrained watertight and in a vacuum, along the peripheral perimeter (4) and along the intermediate edges (5), form a plurality of chambers or parallel tubular channels (6) at the centre whereof there are arranged as many tubes (10) which at the ends (7'), (7"), connect watertight with inlet (9') and outlet (9") manifolds arranged in cross seats (8'), (8") formed of said half shells; said top half shell (1) being made of glass or transparent plastic materials, whereas the bottom one (2) being made of glass, transparent plastic materials, reflecting sheets, of plastic or metals with the inside wall of said parallel tubular channels (6), treated with reflecting coats or products.

2. Flat vacuum photo-thermal solar panel according to claim 1 **characterised in that** the coupled undulating profiles of the half shells (1), (2) form pluralities of chambers or parallel tubular channels (6) with a polygonal, triangular, cylindrical tubular shape.

3. Flat vacuum photo-thermal solar panel according to claims 1 and 2 **characterised in that** said tubes (10), comprised in said chambers or parallel channels (6) are provided with longitudinal radial fins (11), for increasing the heat absorbing and structural stiffening surface.

4. Flat vacuum, photo-thermal solar panel according to claims 1, 2 and 3, **characterised in that** said half shells (1) and (2) are profiled with an equal plurality of longitudinal undulations (3), with semi-circular, triangular, semi-polygonal or mixed section, and are coupled and constrained together, the one on the other, along the peripheral perimeter (4) and along the intermediate edges (5) of the undulations (3), forming pluralities of chambers or almost tubular channels (6), with circular or polygonal section wherein as many tubes (10) are arranged, with or without radial fins (11), the front (7') and back (7") ends whereof connect watertight with said inlet (9') and (9") outlet manifolds arranged inside said cross chambers (8') and (8") provided at the cross ends of the same half shells (1) and (2).

5. Flat vacuum photo-thermal solar panel according to claims 1 to 4 **characterised in that** said tubes (10), comprised in said chambers or almost tubular channels (6) are interconnected to one another and connected to at least one connecting valve (12) for vacuum pumps.

6. Flat vacuum photo-thermal solar panel according to the previous claims **characterised in that** the ends (7'), (7") of said tubes (10), arranged at the centre of said chambers or tubular channels (6), and connected to said inlet (9') and outlet (9") manifolds, are provided with coupling flanges for other equal solar panels.

7. Flat vacuum photo-thermal solar panel as described, with the reservation expressed in the last paragraph of the descriptive part, as illustrated by way of an example, according to the previous claims and for the objects as specified.
